# EUROPEAN PATENT APPLICATION

(11) **EP 1 450 192 A1**
(43) Date of publication of application: **25.08.2004**
(21) Application number: 02788690.2
(22) Date of filing: 29.11.2002
(51) Int. Cl.: G02B 6/44

(54) **PLASTIC OPTICAL FIBER AND OPTICAL FIBER CABLE**

(30) Priority: 30.11.2001 JP 2001366371; 13.11.2002 JP 2002329656
(71) Applicant: Asahi Glass Company, Limited, Chiyoda-ku, Tokyo 100-8405 (JP)
(72) Inventor: Izumitani, Kozo c/o Lucent Technologies Yazaki Ltd, Gotemba-shi, Shizuoka 412-0046 (JP); Sanada, Hiroyuki Lucent Technologies Yazaki Ltd., Gotemba-shi, Shizuoka 412-0046 (JP); Ueno, Masatake c/o Lucent Technologies Yazaki Ltd., Gotemba-shi, Shizuoka 412-0046 (JP); Watanabe, Yuji c/o Asahi Glass Company, Limited, Yokohama-shi, Kanagawa 221-8755 (JP); Takano, Yoshinobu c/o Asahi Glass Company, Limited, Yokohama-shi, Kanagawa 221-8755 (JP); Matsuyama, Yoshitaka Asahi Glass Company, Limited, Yokohama-shi, Kanagawa 221-8755 (JP)
(74) Representative: Müller-Boré & Partner Patentanwälte
(86) International application number: PCT/JP2002/012517
(87) International publication number: WO 2003/046631

(57) **Abstract**

Even in a case of not employing a focusing lens combined with a light source, or in a case of using visible light or using infrared light in a short communication distance, high quality optical communication can be performed without having unnecessary propagation light propagating in the protection coating.

The present invention provides a plastic optical fiber comprising a core 1 and a cladding 2 formed by employing a resin containing an appropriate material, and a protection coating 3 formed on the outer periphery of the cladding 2, made of a hydrocarbon type resin, which comprises an absorption layer 4 containing a dye 42 for absorbing light of a specific wavelength formed as an outermost layer for the protection coating 3.

## Description

### TECHNICAL FIELD

The present invention relates to a plastic optical fiber formed by employing a resin for a core and a cladding, and to an optical fiber cable.

### BACKGROUND ART

Recently, various types of fluoropolymer plastic optical fibers have been developed (for example, refer to JP-A-6-194549), which employ a fluorine-containing resin for a core 101 and a cladding 102 shown in Fig. 4, for example, and which are suitable for using a near-infrared light. For example, there is realized a plastic optical fiber having a grated index type refractive index distribution of the core, which can achieve a transmission rate of at least 100 Mbps between two points aparting at least 100 m from each other.

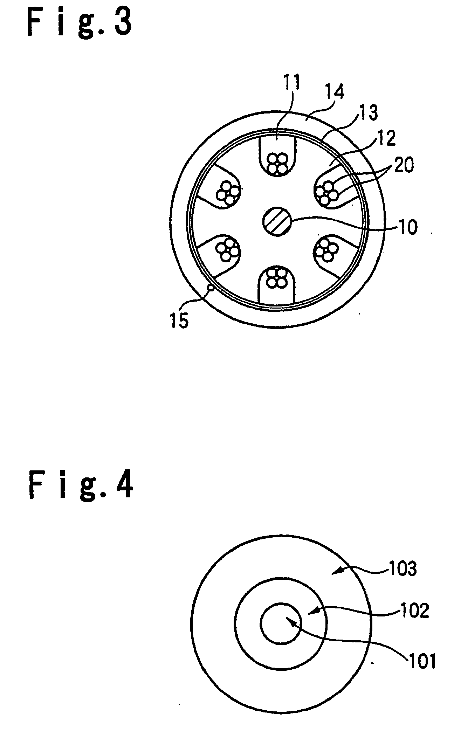

Further, there is a known plastic optical fiber of this type which comprises a protection coating 103 (refer to Fig. 4) employing a hydrocarbon type resin provided on the outer periphery of the cladding 102, for reinforcement. In the case of the plastic optical fiber having the protection coating, when such a fiber of, for example, about 1 m long (short distance) is used and, if light is incident at an angle larger than the numerical aperture (NA) of the core 101 of the optical fiber, the light may propagate in the protection coating 103 by the effect of the refractive index difference between the protection coating 103 and air.

For example, in most cases, a focusing lens is employed when a LD (laser diode) or a LED (light emitting diode) is employed as a light source for an optical link. However, when the focusing lens is not employed for reducing the cost, light emitted from the LD or the LED may spread before it is incident into the optical fiber, and is incident also into the protection coating 103 besides the core 101. In this case, there is a possibility that the light propagating in the protection coating 103 causes a problem such as deterioration of a receiving signal at the destination.

Further, when a near-infrared light having an wavelength of at least, for example, 850 nm is used as light to be transmitted in the protection coating 103, the light is absorbed by hydrocarbon resin in the protection coating 103. Accordingly, when the light is transmitted with a length of at least 10 m, the light transmitted through the protection coating 103 is not observed at the destination.

However, when light having an wavelength of, for example, 650 nm in a visible light region is used, the absorption phenomenon by the hydrocarbon resin is not likely to occur, and the light transmitted in the protection coating 103 is observed at the destination in some cases. Here, even when an infrared light having a wavelength of at least 800 nm is used, pulses of light propagating in the protection coating 103 reach a photo-detector system at the destination in some cases if the transmission length is short e.g. a few meters.

In a case where the pulses of such light are incident in the photo-detector system, since the protection coating 103 has a higher refractive index than the core 101, the speed of light propagating in the protection coating 103 is slower than that in the core 101. Therefore, the light propagating in the protection coating 103 propagates slower than the light propagating in the core 101, and they are observed as two separated pulses at the photo-detector unit. As a result, there occurs a problem that bit error is increased to deteriorate the quality of digital communication.

Considering the above-mentioned circumstances, it is an object of the present invention to provide a plastic optical fiber in which unnecessary propagation light is not propagated in a protection coating even in a case of not employing a focusing lens combined with a light source or in a case of using visible light or using an infrared light in a short communication distance, thereby performing high quality optical communication, and to provide an optical fiber cable employing such a plastic optical fiber.

### DISCLOSURE OF THE INVENTION

The present invention provides a plastic optical fiber comprising a core and a cladding each made of a resin containing an appropriate material, and a protection coating made of a hydrocarbon type resin formed on the outer periphery of the cladding, wherein an absorption layer containing a dye for absorbing light of a specific wavelength or light in a specific wavelength range is formed on the outermost portion of the protection coating.

Further, the present invention provides the above-mentioned plastic optical fiber, wherein the core and the cladding are each made of a fluorine-containing resin.

Further, the present invention provides the plastic optical fiber, wherein the absorption layer is constituted to absorb at least light, incident into the absorption layer from outside, having the same wavelength as the light to be propagated in the core, by the effect of the dye so that the light is prevented from entering into the core and the cladding.

Further, the present invention provides any one of the above-mentioned plastic optical fibers wherein the absorption layer is formed by coating.

Further, the present invention provides the plastic optical fiber wherein a pigment employing an inorganic material, a pigment employing an organic material or a pigment as a mixture of these pigments, is employed as the dye.

Further, the present invention provides an optical fiber cable comprising any one of the above-mentioned plastic optical fibers.

### BRIEF DESCRIPTION OF THE DRAWINGS

Fig. 1 is a cross-sectional schematic view showing the construction of a fluoropolymer plastic optical fiber according to an embodiment of the present invention.
Fig. 2 is a cross-sectional schematic view showing an example of an optical fiber cable employing the fluoropolymer plastic optical fiber of the present invention.
Fig. 3 is a cross-sectional schematic view showing another example of an optical fiber cable employing the fluoropolymer plastic optical fiber of the present invention.
Fig. 4 is a cross-sectional schematic view showing the construction of a conventional plastic optical fiber.

### BEST MODE FOR CARRYING OUT THE INVENTION

Now, an embodiment of the present invention will be described with reference to drawings.

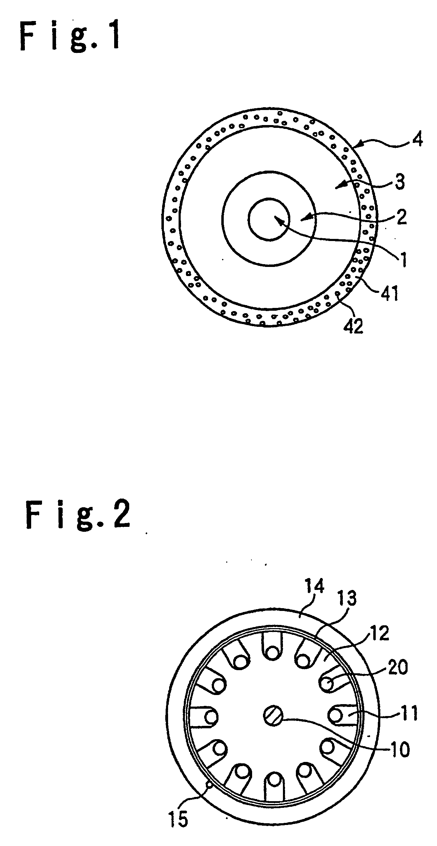

Fig. 1 is a cross-sectional schematic view showing the construction of a fluoropolymer plastic optical fiber according to an embodiment of the present invention.

The fluoropolymer plastic optical fiber of this embodiment comprises a core 1, a cladding 2, a protection coating 3 and a colored layer 4 in this order from the center. In particular, the colored layer 4 contains in its base material 41 a blue dye 42.

The core 1 is made of, for example, perfluorobutenyl vinyl ether homopolymer containing a fluororesin (refractive index n₁=1.342) (tradename: Cytop manufactured by Asahi Glass Co., Ltd.) as a base material and a perfluoro compound having a higher refractive index than the base material added as a dopant for increasing the refractive index of the base material, and is formed to have a diameter of 120 µm.

Further, the core 1 of this embodiment is formed, for example, by a preforming method (or an extrusion method) and subjected to e.g. a thermal diffusion method to have a GI (grated index) construction having a refractive index of 1.355 at the center and a refractive index distribution close to a Gaussian distribution. Here, the refractive index distribution of the core 1 may be a SI (step index) type as well.

The cladding 2 is made of a perfluorobutenyl vinyl ether homopolymer containing a fluororesin, which is the same material as the base material of the core 1, has a refractive index of n₂=1.342 and is formed to have a layer thickness of 115 µm (outer diameter: 230 µm).

According to the plastic optical fiber of the present invention, the light dispersion in core and cladding materials can be reduced because the core 1 and the cladding 2 contain fluorine as described above. Specifically, it has less light dispersion from a visible region to a near infrared region as compared with other plastic optical fibers such as an optical fiber made of PMMA, and has less light dispersion in the visible region as compared with silica optical fibers. Such reduction of light dispersion becomes more remarkable by doping a perfluoro compound into the core 1.

The protection coating 3 is made of a material in which the fluorine content is positively excluded so that it can absorb a (near) infrared light. In this embodiment, it is made of a resin without containing fluorine such as polymethyl methacrylate (PMMA) having a refractive index of, for example, 1.492 and is formed to have a thickness of 246 µm (outer diameter: 492 µm). Here, the refractive index of this protection coating 3 is higher than that of the core 1 and the cladding 2 in this embodiment. However, the opposite construction is also acceptable.

Meanwhile, the absorption layer 4 is constituted so that at least light incident into the absorption layer 4 from the outside, the light having the same wavelength as the light propagating in the core 1, is absorbed by a dye 42 to be described later, and the incident light from the side of the absorption layer 4 is prevented from entering into the core 1 and the cladding 2. Further, a material having higher refractive index than the protection coating 3 is employed for the base material 41 in this absorption layer 4, and the absorption layer 4 is formed to have a thickness of, for example, about 7 µm. Here, a UV-curable epoxy acrylate having a refractive index of 1.548 is employed as the base material 41 in this embodiment, and it is formed by a pressure dice.

Further, considering mainly the wavelength of the light to be transmitted, for example, considering that a red light or light having a longer wavelength is used as a signal light, the absorption layer 4 is formed to contain the dye 42 of a color, for example, blue in this embodiment, which can absorb external light having the same wavelength as the wavelength of light to be transmitted in the core 1, in order to prevent light having such a wavelength from entering into the core 1 and the cladding 2 by absorbing the light even if the light is incident from the outside.

Here, the dye 42 of this embodiment is constituted by an appropriate inorganic material (such as TiO₂ ZnO or 2PbCO₃) as a white pigment and an appropriate organic material (such as a phthalocyanine, a dioxadine or an anthraquinone) as a blue pigment mixed in the inorganic material. Further, in the absorption layer 4 of this embodiment, the dye 42 is mixed in the base material 41 in a mixing ratio of 15 wt%, and the refractive index is higher (refractive index n=1.548) than that of the protection coating 3. However, the mixing ratio is not limited to this ratio.

Further, the absorption layer 4 is formed by coating the outer periphery of the protection coating 3, and an UV-curable resin is employed for the base material 41 and the resin is UV-cured to increase the bond strength in this embodiment. However, a thermosetting resin may be employed for the base material 41 and cured by heat. Here, a UV-curable resin is preferred for the base material 41 from a viewpoint of productivity. There is no particular restriction as to the refractive index of the base material 41.

Therefore, according to the embodiment, since the dye 42 is mixed in the absorption layer 4, even if light is incident from the outside and transmitted through the fluoropolymer plastic optical fiber, at least external light having the same wavelength as the signal light transmitted in the core 1 can be absorbed when it collide with the dye 42 during its transmission in the absorption layer 4. As a result, it is possible to prevent the light from entering into the core 1 in the fluoropolymer plastic optical fiber.

Here, with respect to the wavelength region to be absorbed, since light in a near-infrared region is employed for optical communications in these days, it is preferred that the absorption effect is obtainable in the wavelength region of from 500 to 1300 nm.

The present invention further provides an optical fiber cable comprising the above-mentioned fluoropolymer plastic optical fiber. There is no restriction as to the construction and the structure of the optical fiber cable itself, and ones shown in cross-sectional views of Fig. 2 and Fig. 3 may be mentioned. Further, the materials to be used may be known ones.

The optical fiber cable shown in Fig. 2 has a tension member 10 at the center and the fluoropolymer plastic optical fiber 20 as mentioned above is accommodated in each of slots 11 of a slot rod 12 in which a plurality of slots 11 are formed at the outer periphery at equal intervals. Then, the outer periphery is wrapped with a wrapping tape 13 and the entirety is wrapped with a sheath 14. Here, a reference numeral 15 in the Figure designates a tearing string for easily removing the sheath 14 so as to take out the fluoropolymer plastic optical fibers 20 from the cable at a time of branching. Further, the Figure shows a construction of twelve fibers in which all twelve fluoropolymer plastic optical fibers 20 are accommodated. However, the numbers of the slots 11 and the fluoropolymer plastic optical fibers 20 can be optionally selected.

Further, as shown in Fig. 3, a plurality (four in this embodiment) of the above-mentioned fluoropolymer plastic optical fibers 20 can be accommodated in each slot 11.

Here, in the case where a plurality of fluoropolymer plastic optical fibers 20 are accommodated in each slot 11, the plurality of fluoropolymer plastic optical fibers 20 may be coated as a whole to prevent the fluoropolymer plastic optical fibers 20 from colliding with each other by e.g. vibration. In this case, the cable may be flattened as described in e.g. JP-A-11-231181 not shown. Further, a plurality of flattened cables may be laminated as described in e.g. JP-A-11-202171.

Now, the function of this embodiment will be described.

As described above, there is no restriction as to the refractive index of the resin to be employed as the base material 41 of the colored layer 4, and it may, for example, be higher or lower than the refractive index of the protection coating 3 (the refractive index of the colored layer 4 is higher in this embodiment). Each of these cases will be described.
(1) In a case where the refractive index of the colored layer 4 (base material 41) is higher than or equal to that of the protection coating 3:
   For example, it is assumed that a part of signal light having a specific wavelength A to be incident into the core from the light source is incident into the protection coating 3. However, the light in the protection coating 3 is not totally reflected at the interface with the base material due to the relation of their refractive indices. Therefore, in the signal light propagating in the protection coating 3, light propagating towards the interface with the absorption layer 4 is transmitted and leaked into the absorption layer 4 regardless of the angle (even if the angle exceeds the critical angle) with respect to the absorption layer 4. As a result, light propagating in the protection coating 3 can be removed.
   Here, in the light incident into the absorption layer 4 from the protection coating 3, light propagating towards the interface with the outside can be led outside if it proceeds to the interface at an angle larger than the critical angle. On the other hand, light proceeding towards the interface at an angle smaller than the critical angle, is totally reflected and little light can be led outside from the absorption layer 4. However, the dye 42 capable of absorbing light having the wavelength is mixed in the absorption layer 4. Accordingly, even when the light is totally reflected at the interface with the outside and can not be led outside, the light can be removed by being absorbed by the dye 42. Here, external light incident into the absorption layer 4 from the outside can also be removed by being absorbed by the dye 42 in the same manner.
(2) In a case where the colored layer 4 (base material 41) has a lower refractive index than the protection coating 3:
   In the light proceeding towards the interface with the absorption layer 4, which is a part of signal light propagating in the protection coating 3, light proceeding at an angle larger than the critical angle to the interface with the absorption layer 4 is transmitted through the interface and leaks out into the absorption layer 4, whereby the light propagating in the protection coating 3 can be removed. On the other hand, the light propagating in the protection coating 3 at an angle of not larger than the critical angle is totally reflected at the interface with the absorption layer 4. However, a part of the light, namely, a so-called evanescent light leaks into the absorption layer 4 in a microscopic point of view.
   As is well known, the propagation speed of light is inversely proportional to the refractive index of medium to be propagated. Here, in the case of (2), since the refractive index of the base material 41 is lower than the case of (1), the above-described evanescent light proceeds in the absorption layer 4 at a higher speed than the speed in the absorption layer 4 in the case of (1). In other words, since the moving distance per unit time is longer, the probability of colliding with the dye 42 per unit time is higher than the case of (1). Accordingly, the evanescent light leaked into the absorption layer 4 can be absorbed and removed quickly and efficiently in a short time. Further, the absorption and removing function to the evanescent light by the dye 42 is repeatedly performed at every time when light propagating in the protection coating 3 is totally reflected at the interface with the absorption layer 4, whereby the light propagating in the protection coating 3 can be gradually attenuated. Here, external light incident into the absorption layer 4 from the outside can be removed by being absorbed by the dye 42 in the same manner as the case of (1).
   In the above-mentioned, fluoropolymer plastic optical fiber and the optical fiber cable of the present invention are described in detail. The fluoropolymer plastic optical fiber and the optical fiber cable of the present invention have a larger attenuation than silica optical fibers like other plastic optical fibers. However, they have characteristics that they are excellent in flexibility and not likely to be broken even if the core 1 is made larger, whereby they are particularly suitable for short distant communications such as LANs.

Examples are described as follows.

### EXAMPLE 1

With respect to a plastic optical fiber A of a Comparative Example and a plastic optical fiber B of the present invention, to be described later, each having a length of 1.8 m, an experiment was carried out to compare their propagation characteristics of signal light pulses.

Here, for the plastic optical fiber A of the Comparative Example, a bare fiber was employed, which comprises a cladding made of a perfluorobutenyl vinyl ether homopolymer (refractive index n₁=1.342) (tradename: Cytop manufactured by Asahi Glass Co., Ltd.) and a core formed inside the cladding in which a dopant having higher refractive index than the cladding was diffused to have a predetermined refractive index distribution. On this bare fiber, a protection coating made of polymethyl methacrylate (PMMA) was provided.

On the other hand, for the plastic optical fiber B of the present invention, one comprising the same core 1, cladding 2 and protection coating 3 as those of the plastic optical fiber A of the Comparative Example, was employed. Further, on the outer periphery of the protection coating 3, an absorption layer 4 for which UV-curable epoxy acrylate was used as the base material 41 and a blue dye was incorporated therein, was formed to be 7 µm thick by appropriately controlling the line speed and the UV radiation intensity so that the heat amount provided by a known UV radiation apparatus became less than the softening heat amount of the plastic optical fiber B. Here, the core diameters, the cladding diameters and the protection coating diameters of these optical fibers A and B were each equal to each other and they were 120 µm, 230 µm and 492 µm respectively.

Further, a laser diode (wavelength: 810 nm; a near infrared light) was employed as a light source, and pulses of 50 ps (pico seconds) wide were let incident in these plastic optical fibers A and B by using a lens system having a NA=0.25. Here, incident-side end faces of these optical fibers A and B were fixed to an optical stage, so that the pulses could be incident at various positions of the incident-side end faces by finely adjusting the optical stage. Pulse waves from output-side end faces of these plastic optical fibers A and B were observed by a sampling optical oscilloscope OOS-01 manufactured by Hamamatsu Photonics K.K.
(1) As a result, when the optical stage was adjusted so that the center of the core of the incident-side end face of each of the plastic optical fibers A and B came to the focal position of the lens system, and pulses were incident into each of the plastic optical fibers, there was no pulse observed other than pulses propagating in the core in either the plastic optical fiber A or B.
(2) On the other hand, when the center of the core in the incident-side end face was moved backwards by 1 mm along the axis of each of the plastic optical fibers A and B from the focal position of the lens system, a part of the pulses from the light source were incident also into the protection coating 3, and secondary pulses propagating in the protection coating 0.88 ns behind the primary pulses propagating in the core were observed in the case of the plastic optical fiber A of the Comparative Example. On the other hand, in the case of the plastic optical fiber B, there was observed no secondary pulse propagating behind the primary pulse (disturbing optical communications).

From these results, it was confirmed that high quality optical communication was possible.

### EXAMPLE 2

A plastic optical fiber C was prepared, the fiber comprising a core 1, a cladding 2 and a protection coating 3 each being the same as those of the plastic optical fiber of the Comparative Example in "Example 1", and an absorption layer 4 formed on the outer periphery of the protection coating 3, made of a UV-curable epoxy acrylate as a base material 41 containing carbon black as an inorganic pigment, the absorption layer being formed to be 7 µm thick by properly controlling the line speed and the UV radiation intensity so that heat amount provided by a known UV radiation apparatus becomes less than the softening heat amount of the plastic optical fiber A. Here, the core diameter, the cladding diameter and the protection coating diameter of the plastic optical fiber C were the same as those of the plastic optical fibers A and B, and they were 120 µm, 230 µm and 492 µm respectively. There was observed no pulse propagating in the protection coating in the plastic optical fiber C like the one in the plastic optical fiber A.

Further, a UV radiation test was performed with respect to the plastic optical fibers A and C. A bending test at a bending radius of 15 mm was performed 1000 times with respect to each of these fibers to compare the increase of the brittleness of the reinforcement layer. As a result, the plastic optical fiber A was broken within 1000 times of bending while there was no breakage occurred in the plastic optical fiber C. Accordingly, it is understood that UV rays are absorbed by carbon black, whereby it becomes possible to prevent the protection coating 3 from becoming brittle.

### EXAMPLE 3

An example of the specifications of the optical fiber cable is shown. Namely, as shown in Fig. 2, the cable has a diameter of 11.5 mm, and has a tension member 10 made of a blueing steel wire having a diameter of 1.6 mm at the center of the cable. The plastic optical fiber B prepared in "Example 1" is accommodated in each slot 11 of a slot rod 12 made of polyethylene which has twelve slots 11 formed at equal intervals at its periphery. Then, a wrapping tape 13 made of polyester of 30 mm wide and 0.18 mm thick is wrapped three times around the slot rod 12, and it is entirely covered with a sheath 14 made of a non-flammable polyethylene having a thickness of 1.0 mm. Here, a tearing string 15 is made of a para-type all aromatic polyamide fiber of 1000 denier.

### INDUSTRIAL APPLICABILITY

As described above, the present invention provides a plastic optical fiber comprising a core and a cladding each made of a resin containing an appropriate material, and a protection coating made of a hydrocarbon type resin formed on the outer periphery of the cladding, wherein an absorption layer containing a dye for absorbing light of a specific wavelength or light in a specific wavelength range formed as the outermost layer of the protection coating, whereby it becomes possible to prevent light from propagating in the protection coating which may create a problem when the fiber of a short distance is used for an optical transmission at a high bit rate, and to prevent transmission errors from occurring.

Further, according to the present invention, an expensive package of LD or LED with a lens which has been used for focusing output light from the light source at the core of a plastic optical fiber, or an external lens which has been required besides the light source. become unnecessary. In other words, even with an inexpensive LD or LED packaged without a lens, the problem that the signal light is propagated in the protection coating can be prevented from occurring, whereby it becomes possible to reduce the cost of a transmission apparatus.

Further, according to the present invention, an absorption layer is provided as the outermost layer of the plastic optical fiber, whereby even if light of the same wavelength as signal light propagating in the core of the plastic optical fiber is incident from the outside, such light is absorbed by a dye in the absorption layer and is prevented from entering into the core to disturb the signal light. Accordingly, high quality optical communication becomes possible.

Further, according to the present invention, it becomes possible to prevent deterioration of the protection coating due to UV rays contained in the sun light or light from fluorescent lamps even if a plastic optical fiber is laid out without being covered e.g. in a cable.

Further, by providing a colored layer as the outermost layer of the plastic optical fiber, each plastic optical fiber can be easily identified in a case where many plastic fibers are used as a group, whereby various types of works can be performed efficiently to the group of plastic optical fibers.

Further, the optical fiber cable of the present invention comprises fluoropolymer plastic optical fibers having the above-mentioned characteristics, whereby even in a case of not employing a lens as a combination for focusing light or in a case of using visible light or using an infrared light in a short communication distance, unnecessary propagation light can be removed and high quality optical communication can be performed.

## Claims

1. A plastic optical fiber comprising a core and a cladding each made of a resin containing an appropriate material, and a protection coating made of a hydrocarbon type resin formed on the outer periphery of the cladding, wherein an absorption layer containing a dye for absorbing light of a specific wavelength or light in a specific wavelength range is formed on the outermost portion of the protection coating.

2. The plastic optical fiber according to Claim 1, wherein the core and the cladding are each made of a fluorine-containing resin.

3. The plastic optical fiber according to Claim 1 or 2, wherein the absorption layer is constituted to absorb at least light, incident into the absorption layer from outside, having the same wavelength as the light to be propagated in the core, by the effect of the dye so that the light is prevented from entering into the core and the cladding.

4. The plastic optical fiber according to any one of Claims 1 to 3, wherein the absorption layer is formed by coating.

5. The plastic optical fiber according to any one of Claims 1 to 4, wherein a pigment employing an inorganic material, a pigment employing an organic material or a pigment as a mixture of these pigments, is employed as the dye.

6. An optical fiber cable comprising the plastic optical fiber as defined in any one of Claims 1 to 5.
